# FASCICULE DE BREVET EUROPEEN

(11) **EP 1 847 687 B1**
(45) Date de publication et mention de la délivrance du brevet: **20.02.2013**
(21) Numéro de dépôt: 07290348.7
(22) Date de dépôt: 22.03.2007
(51) Int. Cl.: F01D 11/24, F01D 9/06, F01D 25/24, F01D 25/12

(54) **Dispositif de refroidissement d'un carter de turbine d'une turbomachine et distributeur associé**
Vorrichtung zur Abkühlung eines Turbinengehäuses einer Strömungsmaschine und zugehöriger Verteiler
Device for cooling a turbine casing of a turbomachine and a distributor therefore

(30) Priorité: 30.03.2006 FR 0602749
(43) Date de publication de la demande: 24.10.2007
(73) Titulaire: SNECMA, 75015 Paris (FR)
(72) Inventeur: Dervaux, Alexandre Nicolas, 75014 Paris (FR); Hazevis, Philippe Gérard Marie, 77141 Vaudoy en Brie (FR); Martet, Renaud, 91120 Palaiseau (FR); Pabion, Philippe Jean-Pierre, 77000 Vaux Le Penil (FR); Roger, Stéphanie Dominique, 77720 Mormant (FR); Schwartz, Eric, 77240 Seine-Port (FR)
(74) Mandataire: Ramey, Daniel

(56) Documents cités:
- WO-A2-01/51771
- GB-A- 1 322 801
- US-A1- 2002 122 716
- US-A1- 2005 002 779
- US-B1- 6 227 798

## Description

La présente invention concerne un dispositif de refroidissement d'un carter de turbine d'une turbomachine, en particulier d'un turboréacteur ou d'un turbopropulseur d'avion.

Les documents US 2002/122716 A1, US-B1-6 227 798, WO 01/51771 A2, GB-A- 1 322 801, et US 2005/002779 A1, décrivent chacun un dispositif de refroidissement ou de ventilation d'un turbine ou de composants d'une turbine de turbomachine.

Une turbine de turbomachine comprend plusieurs étages comportant chacun un distributeur formé d'une rangée annulaire d'aubes fixes portées par le carter de la turbine et une roue montée rotative en aval du distributeur dans une enveloppe cylindrique formée par des secteurs d'anneau fixés circonférentiellement sur des crochets de carter de la turbine par l'intermédiaire de verrous en forme de C ou de U.

Les aubes du distributeur du premier étage ou étage amont sont exposées à des températures importantes et comprennent des cavités internes d'écoulement d'air de refroidissement prélevé en amont sur le compresseur de la turbomachine et amené par des conduits jusqu'à une enceinte formée dans le carter autour du distributeur amont de la turbine. Des tubes cylindriques de raccordement sont montés dans l'enceinte et relient chacun l'enceinte à une cavité interne d'une aube du distributeur amont. L'air de refroidissement sort de cette cavité à l'extrémité radialement interne de l'aube dont le bord de fuite peut aussi comprendre des orifices débouchant dans la cavité pour la sortie de l'air de refroidissement.

Les crochets de fixation des secteurs d'anneau et notamment ceux situés directement en aval des aubes du distributeur de l'étage amont sont protégés thermiquement par une tôle annulaire d'étanchéité qui est montée entre les secteurs d'anneau et les extrémités externes des aubes du distributeur pour limiter le passage de gaz depuis la veine radialement vers l'extérieur dans un espace annulaire de logement des crochets de carter.

Toutefois l'étanchéité n'est pas parfaite et les fuites de gaz chauds venant de la veine de la turbine peuvent faire monter la température des crochets de carter et provoquer la formation de criques ou fissures susceptibles de détruire les crochets.

Par ailleurs, il ne serait pas possible de monter sur la turbine un circuit supplémentaire de refroidissement qui amènerait sur ces crochets de suspension de l'air frais prélevé en amont de la chambre de combustion, pour des raisons de complexité, d'encombrement et de coût.

L'invention a notamment pour but de répondre de manière simple, efficace et économique à ce problème.

Elle propose à cet effet un dispositif de refroidissement d'un carter de turbine dans une turbomachine, en particulier dans un turboréacteur ou un turbopropulseur d'avion, cette turbine comprenant plusieurs étages comportant chacun un distributeur formé d'une rangée annulaire d'aubes fixes portées par le carter de la turbine et une roue montée rotative à l'intérieur du carter dans une enveloppe cylindrique formée de secteurs d'anneau fixés circonférentiellement sur le carter, et un circuit de refroidissement des aubes du distributeur de l'étage amont, comprenant des conduits d'amenée d'air de refroidissement dans des cavités formées dans les aubes du distributeur, et des moyens d'amenée d'air sur des crochets amont de carter de suspension des secteurs d'anneau entourant la roue de l'étage amont, ces moyens d'amenée d'air reliant les cavités internes des aubes du distributeur de l'étage amont à l'espace annulaire dans lequel sont situés les crochets amont, caractérisé en ce que les cavités internes des aubes sont fermées, à leurs extrémités radialement externes, par des plaquettes rapportées sur le distributeur, et en ce que les moyens d'amenée d'air comprennent des perçages formés dans ces plaquettes et des perçages formés dans un rebord annulaire externe du distributeur qui s'étend radialement entre les parois radialement externes des cavités de refroidissement des aubes et les crochets amont de suspension des secteurs d'anneau.

L'air prélevé dans les cavités des aubes du distributeur de l'étage amont de carter est amené dans l'espace annulaire de logement des crochets amont de carter et permet de réduire leur température, ce qui se traduit par une réduction sensible des risques de formation de criques ou fissures sur les crochets, sans qu'il soit nécessaire d'ajouter des conduits d'amenée d'air frais sur le carter de la turbine.

Cet air permet également de maintenir l'espace annulaire de logement des crochets à une pression supérieure à celle des gaz de combustion passant dans la turbine, ce qui s'oppose à l'introduction de ces gaz dans l'espace annulaire de logement des crochets.

Le débit d'air prélevé pour le refroidissement des crochets amont représente une faible fraction du débit d'air de refroidissement des aubes du distributeur, ce qui a très peu d'influence sur le refroidissement des aubes du distributeur de l'étage amont et sur le rendement de la turbomachine.

Selon une autre caractéristique de l'invention, les moyens d'amenée d'air sur les crochets amont sont répartis sur la périphérie du distributeur et sont formés dans chaque aube fixe.

Les moyens d'amenée d'air comprennent des perçages formés dans les plaquettes rapportées sur les extrémités radialement externes des aubes pour la fermeture hermétique des cavités de refroidissement des aubes du distributeur de l'étage amont, et des perçages formés dans le rebord annulaire externe du distributeur qui s'étend radialement entre les parois radialement externes des cavités de refroidissement des aubes et les crochets amont de suspension des secteurs d'anneau.

Les perçages peuvent être formés par électroérosion et ont un diamètre compris entre 0,1 et 5mm environ.

Dans un mode de réalisation de l'invention, les perçages formés dans le rebord annulaire externe du distributeur s'étendent en oblique par rapport à ce rebord et à l'axe de rotation.

Ces perçages peuvent déboucher à leurs extrémités aval directement dans l'espace annulaire dans lesquels sont situés les crochets amont de carter.

En variante, les perçages sont formés à la périphérie interne du rebord annulaire externe et débouchent à leurs extrémités aval dans un passage annulaire formé entre le rebord annulaire externe du distributeur et un déflecteur annulaire rapporté et fixé sur une partie d'extrémité aval du distributeur.

Les perçages peuvent dans ce cas être formés dans le rebord externe du distributeur au voisinage immédiat d'une paroi externe de révolution du distributeur, ce qui permet d'éviter l'établissement d'un gradient thermique dans le rebord externe du distributeur qui se traduirait par une dilatation thermique différentielle de ce rebord sur son étendue radiale et par des contraintes importantes dans les aubes du distributeur.

Le déflecteur annulaire est par exemple engagé et fixé dans une gorge annulaire externe du distributeur, et est en appui axial sur les extrémités amont des secteurs d'anneau pour limiter le passage de gaz depuis la veine de turbine radialement vers l'extérieur dans le passage annulaire de logement des crochets de carter.

Le déflecteur annulaire est avantageusement sectorisé et formé de plusieurs pièces assemblées circonférentiellement bout à bout par l'intermédiaire de languettes d'étanchéité.

Dans encore une autre variante, les perçages formés dans le rebord annulaire externe du distributeur sont sensiblement perpendiculaires à ce rebord et sont alimentés en air de refroidissement par des rainures formées dans des zones d'accrochage de ce rebord sur le carter de la turbine.

La présente invention concerne également une turbine d'une turbomachine, telle que d'un turboréacteur ou d'un turbopropulseur d'avion, caractérisée en ce qu'elle comprend un dispositif de refroidissement tel que décrit ci-dessus.

La présente invention concerne encore un distributeur amont de turbine d'une turbomachine, comprenant une rangée annulaire d'aubes qui sont reliées à leurs extrémités radialement internes à une paroi de révolution interne et à leurs extrémités radialement externes à une paroi de révolution externe, les aubes comprenant des cavités internes d'écoulement d'air de refroidissement et la paroi externe comportant un rebord annulaire externe à son extrémité aval formé avec des moyens d'accrochage sur un carter de la turbomachine, caractérisé en ce que les cavités internes des aubes sont fermées, à leurs extrémités radialement externes, par des plaquettes rapportées sur la paroi externe du distributeur, et en ce que ces plaquettes et le rebord annulaire du distributeur comportent des perçages pour le passage d'air de refroidissement.

Les perçages peuvent être formés à la périphérie interne du rebord annulaire. Ils peuvent également être formés en oblique ou perpendiculairement au rebord annulaire.

Un déflecteur annulaire peut en outre être fixé sur la paroi externe de révolution du distributeur, en aval de son rebord annulaire.

L'invention sera mieux comprise et d'autres caractéristiques, détails et avantages de celle-ci apparaîtront plus clairement à la lecture de la description qui suit, faite à titre d'exemple non limitatif en référence aux dessins annexés dans lesquels :
- la figure 1 est une vue schématique partielle en coupe axiale d'une turbomachine équipée du dispositif selon l'invention ;
- la figure 2 est une vue à plus grande échelle d'une partie de la figure 1, et représente le distributeur de l'étage amont de la turbine ;
- la figure 2a est une vue agrandie du détail I₂ de la figure 2 ;
- la figure 3 est une vue schématique partielle en perspective du distributeur de l'étage amont de la turbine, vu de l'amont et de côté ;
- la figure 4 est une vue correspondant à la figure 2 et représente une variante de réalisation du dispositif selon l'invention ;
- la figure 4a est une vue agrandie du détail I₄ de la figure 4 ;
- la figure 5 est une vue schématique partielle en coupe axiale d'une autre variante de réalisation du dispositif selon l'invention ;
- les figures 6 et 7 sont des vues schématiques partielles en perspective du rebord annulaire externe du distributeur de la figure 5.

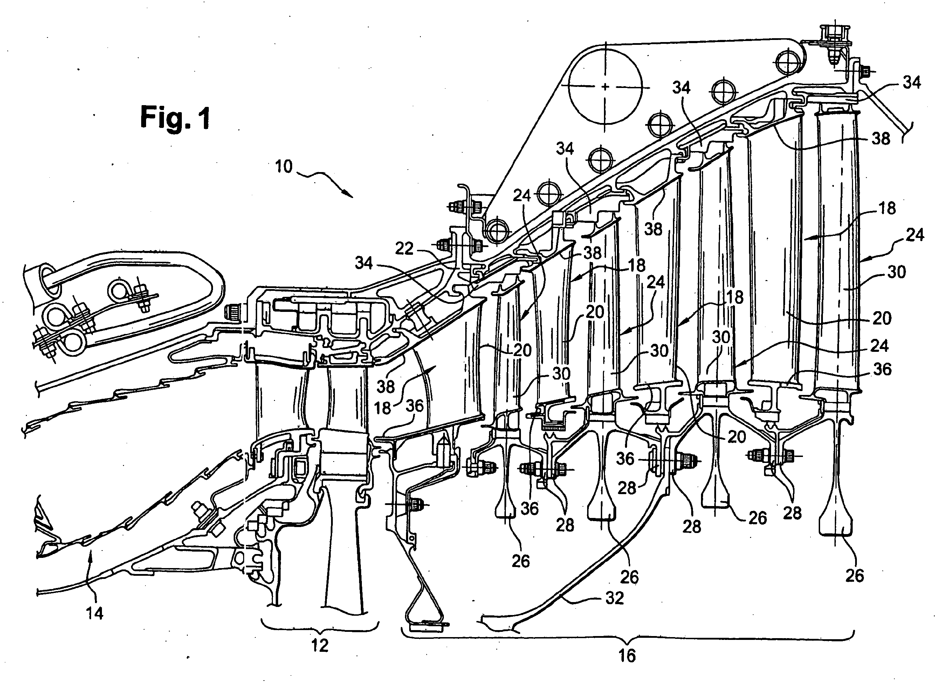

En figure 1, la référence 10 désigne une turbine de turbomachine constituée d'un module haute-pression 12 agencé en sortie d'une chambre de combustion 14 et d'un module basse-pression 16 situé en aval du module haute-pression 12 et comprenant quatre étages comportant chacun un distributeur 18 formé d'une rangée annulaire d'aubes fixes 20 portées par un carter externe 22 de la turbine, et une roue 24 en aval du distributeur 18.

Les roues 24 comprennent des disques 26 assemblés axialement les uns aux autres par des brides annulaires 28 et portant des aubes radiales 30. Les roues 24 sont reliées à un arbre de turbine (non représenté) par l'intermédiaire d'un cône d'entraînement 32 fixé sur des brides annulaires 28 des disques 26.

Chaque roue 24 est entourée extérieurement avec un faible jeu par une enveloppe cylindrique formée par des secteurs d'anneau 34 fixés circonférentiellement sur le carter 22 de la turbine par l'intermédiaire de pièces de verrouillage en forme de C ou de U comme cela sera décrit plus en détail dans ce qui suit.

Les distributeurs 18 comprennent des parois de révolution interne 36 et externe 38, respectivement, qui délimitent entre elles la veine annulaire d'écoulement des gaz dans la turbine et entre lesquelles s'étendent radialement les aubes 20.

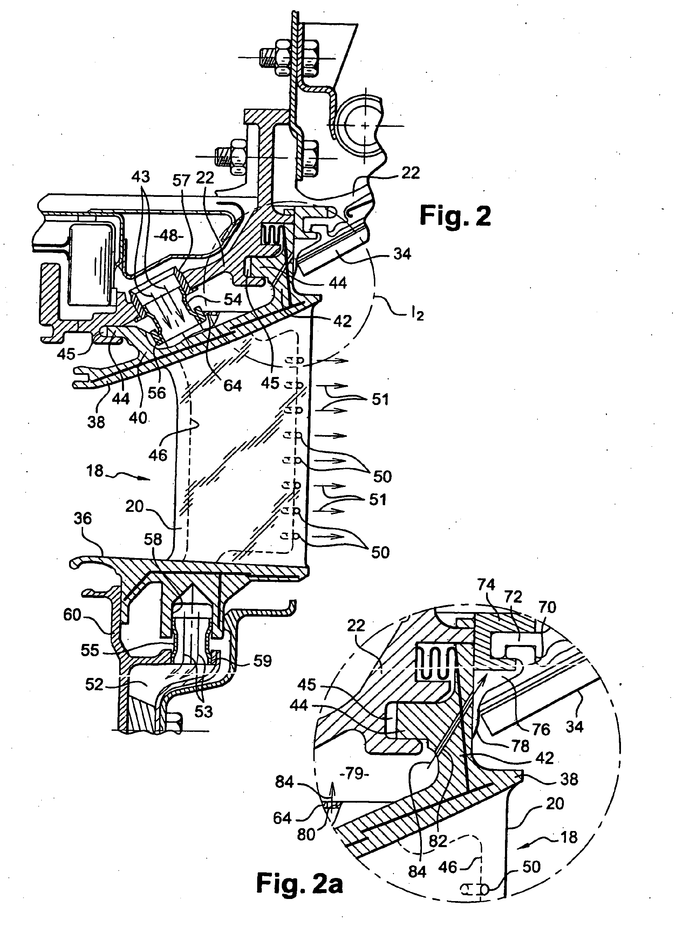

La paroi externe 38 du distributeur 18 de l'étage amont mieux visible en figure 2 comprend des rebords annulaires radialement externes amont 40 et aval 42 comportant des pattes annulaires axiales 44 orientées vers l'amont et destinées à être engagées dans des gorges annulaires axiales 45 correspondantes du carter 22 de la turbine.

Les aubes 20 de ce distributeur 18 comprennent des cavités internes 46 de circulation d'air de refroidissement provenant d'une enceinte d'alimentation 48 (comme représenté par les flèches 43), radialement externe à la paroi 38 du distributeur, cet air étant en partie évacué dans la veine d'écoulement des gaz de la turbine par des orifices 50 formés à proximité du bord de fuite des aubes 20 et débouchant dans leurs cavités internes 46 (flèches 51) et en partie évacué dans une enceinte 52 radialement interne à la paroi 36 du distributeur (flèches 53). L'air de refroidissement est prélevé en amont sur un compresseur de la turbomachine et amené dans l'enceinte d'alimentation par des conduits non représentés.

Les cavités 46 des aubes sont reliées aux enceintes externe 48 et interne 52 par des tubes cylindriques 54, 55, respectivement. Chaque tube 54 de passage d'air entre l'enceinte externe 48 et une cavité 46 d'une aube a une extrémité engagée à étanchéité dans une douille 56 fixée dans un orifice formé dans la paroi 38 du distributeur entre les rebords annulaires externes 40, 42 et débouchant dans la cavité interne 46 d'une aube. L'autre de ses extrémités est engagée à étanchéité dans une douille 57 fixée dans un orifice formé dans le carter 22 de la turbine. Les tubes 55 de passage d'air entre les cavités 46 des aubes et l'enceinte interne 52, ont leurs extrémités engagées à étanchéité dans des orifices 58, 59 de la paroi 36 du distributeur et d'un rebord annulaire d'un carter 60 de l'enceinte 52, respectivement.

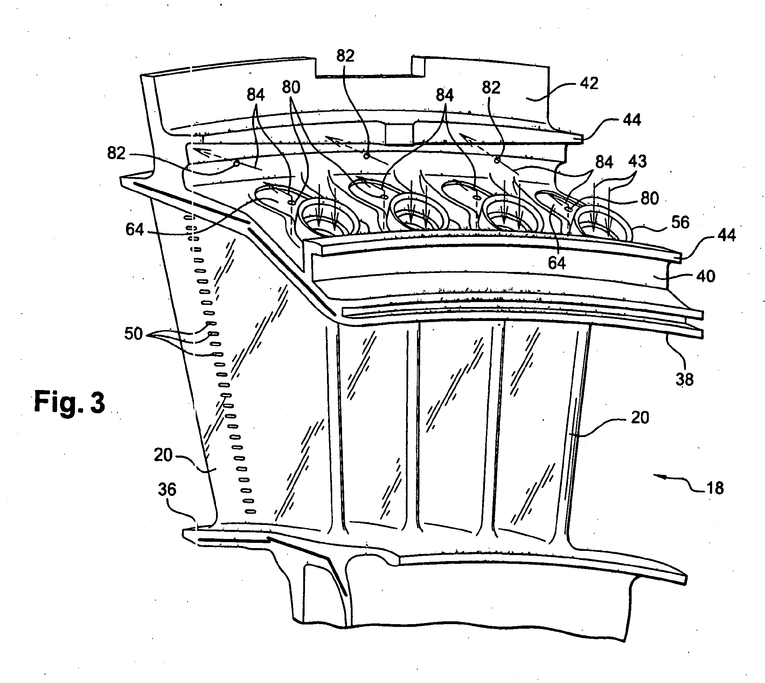

La cavité 46 de chaque aube du distributeur 18 comporte une ouverture formée dans la paroi externe 38 du distributeur à proximité de l'orifice de fixation de la douille 56. Une plaquette 64 est rapportée et fixée sur la paroi 38, comme cela est visible en figure 3, pour fermer de manière hermétique la cavité 46 de l'aube.

Les secteurs d'anneau 34 situés directement en aval du distributeur 18 de l'étage amont (figures 2 et 2a) comprennent chacun à leurs extrémités amont un crochet circonférentiel 70 en portion de cylindre qui est appliqué sur un crochet circonférentiel 72 correspondant en portion de cylindre du carter 22, et qui est retenu par un verrou 74 en forme de C ou de U engagé par l'amont sur les crochets circonférentiels 70 et 72.

Les verrous 74 et les crochets 70, 72 sont logés dans un espace annulaire 76 qui s'étend autour des secteurs d'anneau 34 entre le carter et le distributeur 18, les verrous 74 prenant appui à leurs extrémités amont sur une face aval du rebord annulaire aval 42 de la paroi externe 38 du distributeur.

Les verrous 74 et les crochets circonférentiels 70 et 72 des secteurs d'anneau 34 et du carter 22 sont protégés thermiquement par une tôle annulaire d'étanchéité 78 qui est montée entre les secteurs d'anneau 34 et la face aval du rebord annulaire 42 du distributeur pour limiter le passage de gaz depuis la veine de la turbine radialement vers l'extérieur dans l'espace annulaire 76 de logement des crochets de carter 72.

Les crochets de carter 72 sont en fonctionnement soumis à des températures importantes qui peuvent provoquer la formation de criques ou fissures susceptibles de les détruire.

L'invention permet d'apporter une solution simple à ce problème grâce à des moyens d'amenée d'air de refroidissement sur ces crochets.

Dans un premier mode de réalisation de l'invention représenté aux figures 2 et 3, ces moyens comprennent des perçages 80 formés dans les plaquettes 64 de chaque aube et des perçages 82 formés en oblique dans le rebord externe aval 42 de la paroi externe 38 du distributeur, pour relier les cavités internes 46 des aubes à l'espace annulaire 76 de logement des crochets 70, 72, les perçages 80 et 82 étant régulièrement répartis autour de l'axe de la turbine.

Dans l'exemple représenté, chaque plaquette 64 comprend sensiblement en son milieu un perçage cylindrique 80 (figure 3) orienté sensiblement radialement par rapport à l'axe de la turbine et débouchant à une extrémité dans la cavité 46 de l'aube correspondante et à son autre extrémité dans un passage annulaire 79 situé radialement à l'extérieur de la paroi 38 du distributeur et délimité axialement par les rebords annulaires externes 40, 42 du distributeur. En variante, une partie seulement des plaquettes peuvent comprendre des perçages 80 ou les plaquettes peuvent comprendre deux perçages 80 ou plus. Les perçages pourraient également être inclinés par rapport à l'axe de la turbine et par exemple orientés en aval vers l'extérieur.

Les perçages 82 formés dans le rebord annulaire externe 42 du distributeur 18 sont obliques par rapport à l'axe de la turbine et orientés en aval vers l'extérieur. Ils débouchent à leurs extrémités amont dans le passage annulaire 79, et à leurs extrémités aval sur une face cylindrique interne des verrous 74 engagés sur les crochets 70, 72.

Une faible fraction du débit d'air circulant dans les cavités 46 des aubes du distributeur 18 passe dans le passage annulaire 79 à travers les perçages 80 des plaquettes 64, puis dans l'espace annulaire 76 de logement des crochets 70, 72 à travers les perçages 82 du rebord annulaire 42 du distributeur, comme représenté par les flèches 84. Les crochets 72 sont ainsi suffisamment refroidis pour supprimer les risques de formation de criques ou fissures sur les crochets.

Cette amenée d'air permet également de maintenir l'espace annulaire 76 de logement des crochets à une pression supérieure à celle des gaz chauds s'écoulant dans la turbine, ce qui s'oppose au passage de ces gaz entre les secteurs d'anneau 34 et le rebord annulaire 42 du distributeur 18 au niveau de la tôle annulaire d'étanchéité 78.

Le nombre de perçages 80 formés dans les plaquettes 64 est dans l'exemple représenté supérieur au nombre de perçages 82 formés dans le rebord annulaire 42 du distributeur 18. Le nombre de perçages 80 est par exemple de 96 environ, et le nombre de perçages 82 est par exemple de 72 environ.

En variante, le nombre de perçages 80 formés dans les plaquettes 64 peut être égal ou inférieur au nombre de perçages 82 formés dans le rebord annulaire 42 du distributeur 18.

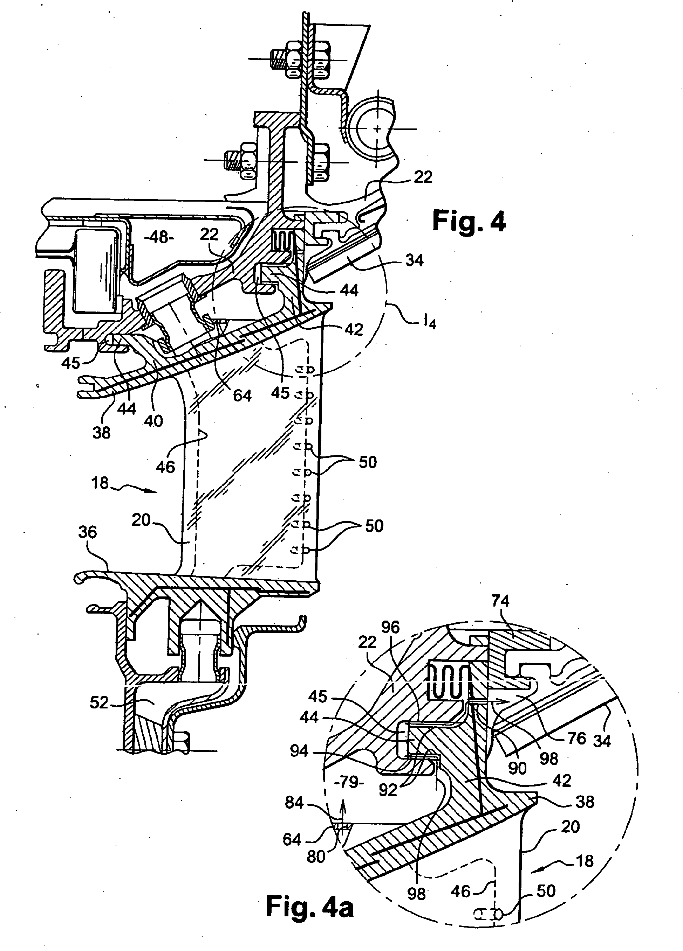

Dans la variante de réalisation de l'invention représentée aux figures 4 et 4a, les perçages 80 formés dans les plaquettes 64 du distributeur sont identiques à ceux décrits en référence aux figures 2, 2a et 3 et le passage annulaire 79 est relié à l'espace annulaire 76 de logement des crochets par l'intermédiaire de perçages axiaux 90 formés dans le rebord annulaire externe 42 du distributeur et de rainures axiales 92 formées dans la patte annulaire 44 de ce rebord externe 42. Les perçages 90 et les rainures 92 sont régulièrement répartis autour de l'axe de la turbine.

Les perçages 90 formés dans le rebord annulaire externe 42 du distributeur 18 sont sensiblement parallèles à l'axe de la turbine et perpendiculaire au rebord 42 et débouchent à leurs extrémités amont sur une face amont du rebord annulaire 42 située radialement à l'extérieur de la patte annulaire d'accrochage 44 et à leurs extrémités aval sur la face aval du rebord annulaire 42 dans l'espace annulaire 76 de logement des crochets 70, 72.

Les rainures 92 sont formées dans des surfaces cylindriques interne 94 et externe 96 de la patte annulaire engagée dans la gorge annulaire 45 du carter 22.

Les rainures 92 de la surface cylindrique externe 96 débouchent à leurs extrémités aval au voisinage des extrémités amont des perçages 90 et à leurs extrémités amont dans le fond de la gorge 45, et les rainures de la surface cylindrique interne 94 débouchent à leurs extrémités amont au fond de la gorge 45 et à leurs extrémités aval dans le passage annulaire 79.

Dans l'exemple représenté, chaque perçage 90 est associé à deux rainures 92 formées dans les surfaces cylindriques interne 94 et externe 96 de la patte annulaire 44, respectivement, qui sont situées ou non dans le même plan radial que le perçage 90.

L'air dans le passage annulaire 79 provenant des cavités internes 46 des aubes est amené dans l'espace annulaire 76 de logement des crochets par les rainures 92 des surfaces interne puis externe de la patte annulaire 44 du rebord externe 42 du distributeur, puis par les perçages 90 du rebord externe 42, comme représenté par les flèches 98.

En variante, les rainures 92 peuvent ne pas être parallèles à l'axe de la turbine. Ces rainures 92 peuvent également être formées sur les surfaces cylindriques de la gorge 45 sur lesquelles s'appuient les surfaces cylindriques 94, 96 de la patte annulaire 44, ces rainures débouchant dans le passage annulaire 79 et au voisinage des perçages 90 comme précédemment décrit.

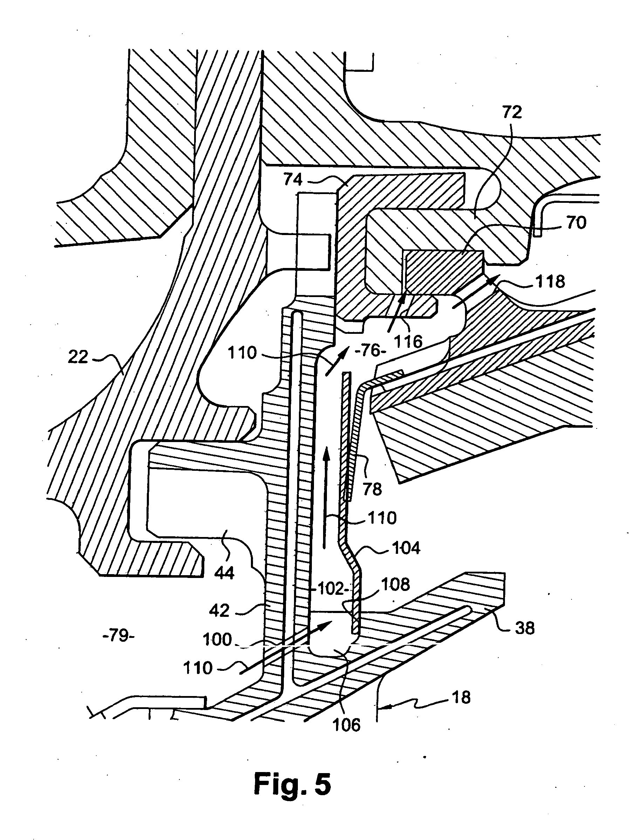

Dans la variante représentée aux figures 5 à 7, les perçages 100 du rebord annulaire externe 42 du distributeur 18 ne sont pas formés dans la partie médiane ou radialement externe du rebord 42 mais au voisinage immédiat de la paroi externe 38 du distributeur et s'étendent sensiblement parallèlement à cette paroi.

Les perçages 100 débouchent à leurs extrémités amont dans le passage annulaire 79, et à leurs extrémités aval dans un second passage annulaire 102 s'étendant transversalement par rapport à l'axe de turbine et communiquant à sa périphérie externe avec l'espace annulaire 76 de logement des crochets 72.

Le passage annulaire 102 entoure la paroi externe 38 du distributeur, et est délimité axialement par le rebord 42 du distributeur et par un déflecteur 104 rapporté et fixé sur la paroi externe 38 du distributeur, en aval du rebord externe 42.

Dans l'exemple représenté, les perçages 100 débouchent à leurs extrémités aval dans une gorge annulaire 106 débouchant vers l'extérieur formée dans la paroi externe 38 du distributeur, en aval du rebord 42, et comportant une paroi radiale 108 sur laquelle est appliquée et fixée par brasage ou soudage une partie d'extrémité radialement interne du déflecteur 104.

Le déflecteur 104 est précontraint axialement par appui de sa partie d'extrémité radialement externe sur la tôle annulaire d'étanchéité 78 montée sur les extrémités amont des secteurs d'anneau 34, pour limiter le passage de gaz depuis la veine de turbine radialement vers l'extérieur dans l'espace annulaire 76 de logement des crochets 70, 72.

En variante, le déflecteur 104 peut venir directement en appui axial sur les extrémités aval des secteurs d'anneau 34.

L'air provenant du premier passage annulaire 79 passe dans le second passage annulaire 102 à travers les perçages 100, puis est amené dans l'espace annulaire 76 de logement des crochets comme représenté par les flèches 110.

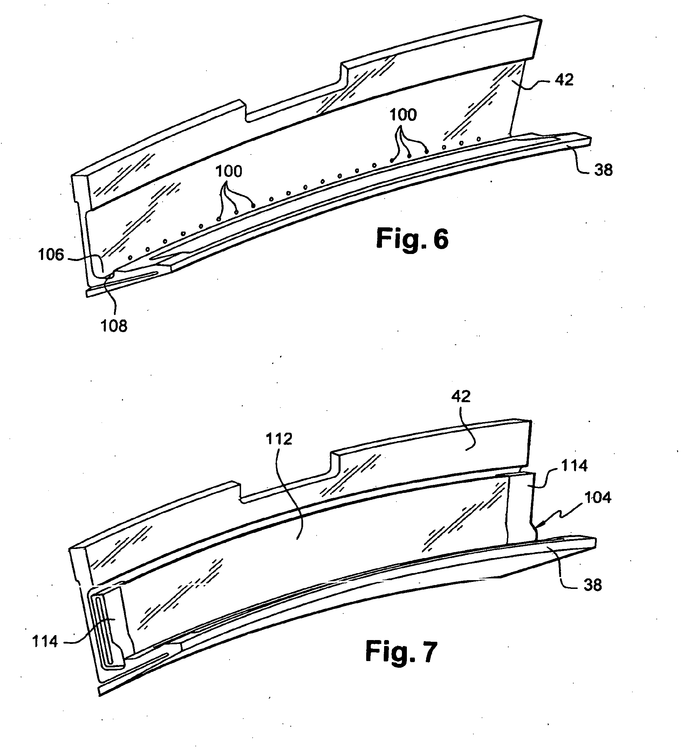

Le nombre de perçages 100 est dans l'exemple représenté en figure 6 supérieur au nombre de perçages 80 formé dans les plaquettes 64 (figure 3). Le nombre de perçages 100 est par exemple compris entre 360 et 504.

Le déflecteur 104 est préférentiellement sectorisé et formé d'une pluralité de pièces 112 assemblées bout à bout par l'intermédiaire de languettes d'étanchéité.

Dans l'exemple représenté en figure 7, les pièces 112 sont associées à chacune de leurs extrémités à des moyens 114 sur lesquels peut s'emboîter une languette d'étanchéité (non représenté), chaque languette étant engagée à une extrémité dans les moyens 114 d'une pièce 112 et à une extrémité opposée dans les moyens 112 d'une pièce 114 adjacente.

Les verrous 74 et les crochets 70 des secteurs d'anneau 34 peuvent également comprendre des perçages 116 et 118 de passage d'air pour assurer le refroidissement des crochets 72 du carter 22 (figure 5).

Les perçages 80, 82, 90, 100, 116 et 118 ont un diamètre compris entre 0,1 et 5mm environ et peuvent être formés par électroérosion ou par toute autre technique appropriée.

La réalisation des figures 5 à 7 permet d'éviter l'établissement d'un gradient thermique dans le rebord annulaire externe 42 du distributeur, qui se traduirait par une dilatation thermique différentielle de ce rebord sur son étendue radiale et par des contraintes dans les aubes du distributeur 18. Le grand nombre de perçages 100 permet d'uniformiser la température sur la périphérie interne du rebord 42 et d'abaisser notablement cette température.

Les déflecteurs 104 permettent de récupérer l'air de refroidissement du rebord 42, pour refroidir les crochets de carter 72. Une légère augmentation du débit d'air de refroidissement permet de compenser l'échauffement de l'air dû au refroidissement du rebord annulaire 42, sans nuire aux performances du moteur.

## Revendications

1. Dispositif de refroidissement d'un carter de turbine dans une turbomachine, en particulier dans un turboréacteur ou un turbopropulseur d'avion, cette turbine (16) comprenant plusieurs étages comportant chacun un distributeur (18) formé d'une rangée annulaire d'aubes fixes (20) portées par le carter (22) de la turbine et une roue (24) montée rotative à l'intérieur du carter dans une enveloppe cylindrique formée de secteurs d'anneau (24) fixés circonférentiellement sur le carter, et un circuit de refroidissement des aubes (20) du distributeur de l'étage amont, comprenant des conduits d'amenée d'air de refroidissement dans des cavités (46) formées dans les aubes (20) du distributeur, et des moyens d'amenée d'air sur des crochets amont de carter (72) de suspension des secteurs d'anneau (34) entourant la roue (24) de l'étage amont, ces moyens d'amenée d'air reliant les cavités internes (46) des aubes du distributeur (18) de l'étage amont à l'espace annulaire (76) dans lequel sont situés les crochets amont (72), **caractérisé en ce que** les cavités internes (46) des aubes (20) sont fermées, à leurs extrémités radialement externes, par des plaquettes (64) rapportées sur le distributeur, et **en ce que** les moyens d'amenée d'air comprennent des perçages (80) formés dans ces plaquettes et des perçages (82, 90, 100) formés dans un rebord annulaire externe aval (42) du distributeur qui s'étend radialement depuis la paroi de révolution externe du distributeur en amont des crochets amont (72) de suspension des secteurs d'anneau (34).

2. Dispositif selon la revendication 1, **caractérisé en ce que** les moyens d'amenée d'air sur les crochets amont de carter (72) sont répartis sur la périphérie du distributeur (18) et sont formés dans chaque aube fixe (20).

3. Dispositif selon la revendication 1 ou 2, **caractérisé en ce que** les perçages (80, 82, 90, 100) sont formés par électroérosion.

4. Dispositif selon l'une des revendications 1 à 3, **caractérisé en ce que** les perçages (82, 100) formés dans le rebord annulaire externe (42) du distributeur (18) s'étendent en oblique par rapport à ce rebord et à l'axe de rotation.

5. Dispositif selon la revendication 4, **caractérisé en ce que** les perçages (82) débouchent à leurs extrémités aval directement dans l'espace annulaire (76) dans lesquels sont situés les crochets amont (72).

6. Dispositif selon l'une des revendications 1 à 4, **caractérisé en ce que** les perçages (100) sont formés à la périphérie interne du rebord annulaire externe (42) et débouchent à leurs extrémités aval dans un passage annulaire (102) formé entre le rebord annulaire externe (42) du distributeur (18) et un déflecteur annulaire (104) rapporté et fixé sur une partie d'extrémité aval du distributeur.

7. Dispositif selon la revendication 6, **caractérisé en ce que** le déflecteur annulaire (104) est engagé et fixé dans une gorge annulaire externe du distributeur (18) et est en appui axial sur les extrémités amont des secteurs d'anneau (34).

8. Dispositif selon la revendication 6 ou 7, **caractérisé en ce que** le déflecteur annulaire (104) est sectorisé et formé de plusieurs pièces (112) assemblées bout à bout par l'intermédiaire de languettes d'étanchéité.

9. Dispositif selon l'une des revendications 1 à 3, **caractérisé en ce que** les perçages (90) formés dans le rebord annulaire externe (42) du distributeur (18) sont sensiblement perpendiculaires à ce rebord et sont alimentés en air de refroidissement par des rainures (92) formées dans des zones d'accrochage de ce rebord sur le carter (22) de la turbine.

10. Turbine d'une turbomachine, telle que d'un turboréacteur ou d'un turbopropulseur d'avion, **caractérisée en ce qu'**elle comprend un dispositif de refroidissement selon l'une des revendications précédentes.

11. Distributeur amont de turbine d'une turbomachine, comprenant une rangée annulaire d'aubes qui sont reliées à leurs extrémités radialement internes à une paroi de révolution interne et à leurs extrémités radialement externes à une paroi de révolution externe, les aubes comprenant des cavités internes d'écoulement d'air de refroidissement et la paroi externe (38) comportant un rebord annulaire externe (42) à son extrémité aval formé avec des moyens (44) d'accrochage sur un carter de la turbomachine, **caractérisé en ce que** les cavités internes (46) des aubes (20) sont fermées, à leurs extrémités radialement externes, par des plaquettes (64) rapportées sur la paroi externe du distributeur, et **en ce que** ces plaquettes et le rebord annulaire (42) du distributeur comportent des perçages (82, 90, 100) pour le passage d'air de refroidissement.

12. Distributeur selon la revendication 11, **caractérisé en ce que** les perçages (100) sont formés à la périphérie interne du rebord annulaire (42).

13. Distributeur selon la revendication 11 ou 12, **caractérisé en ce que** les perçages (82, 90) sont formés en oblique ou perpendiculairement au rebord annulaire (42).

14. Distributeur selon la revendication 11 ou 12, **caractérisé en ce qu'**un déflecteur annulaire (104) est fixé sur la paroi externe de révolution (38) en aval du rebord annulaire (42).

## Claims

1. A device for cooling a turbine casing in a turbomachine, in particular in an aircraft turboreactor or turbopropulsor, said turbine (16) comprising several stages each including a nozzle assembly (18) formed of an annular row of fixed vanes (20) borne by the casing (22) of the turbine and a wheel (24) mounted to rotate inside the casing in a cylindrical shroud formed of ring sectors (24) fixed circumferentially to the casing, a cooling circuit which cools the vanes (20) of the nozzle assembly of an upstream stage, including ducts which carry cooling air into cavities (46) formed in the vanes (20) of the nozzle assembly, and an air-carrying arrangement which carries air to casing upstream hooks (72) which suspend the ring sectors (34) surrounding the wheel of the upstream stage, the air-carrying arrangement connecting the internal cavities (46) of the vanes of the nozzle assembly (18) of the upstream stage to the annular space (76) in which the upstream hooks (72) lie, **characterized in that** radially external ends of the internal cavities of the vanes are closed by plates (64) attached to the nozzle assembly, and **in that** the air-carrying arrangement includes drillings (80) disposed in the plates and drillings (82, 90, 100) disposed in an external downstream annular rim (42) provided on the external wall of revolution (42) which extends radially from the external wall of revolution of the nozzle assembly and upstream from the upstream hooks (72) for suspending the ring sectors (34).

2. The device as claimed in claim 1, **characterized in that** the casing upstream hooks (72) are distributed over the periphery of the nozzle assembly (18) and are formed in each fixed vane (20).

3. The device as claimed in claim 1 or 2, **characterized in that** the drillings (80, 82, 90, 100) are formed by electro discharge machining.

4. The device as claimed in anyone of the claims 1 to 3, **characterized in that** the drillings (82, 100) disposed in the external annular rim (42) of the nozzle assembly extend obliquely with respect to this rim and with respect to the axis of rotation.

5. The device as claimed in claim 4, **characterized in that** the drillings (82) at their downstream ends open directly into the annular space (76) in which the upstream hooks (72) lie.

6. The device as claimed in anyone of claims 1 to 4, **characterized in that** the drillings (100) are formed at the internal periphery of the external annular rim (42) and at their downstream ends open into an annular passage (102) formed between the external annular rim (42) of the nozzle assembly (18) and an annular deflector (104) attached and fixed to a downstream end part of the nozzle assembly.

7. The device as claimed in claim 6, **characterized in that** the annular deflector (104) is engaged and fixed in an external annular groove of the nozzle assembly (18) and bears axially on the upstream ends of the ring sectors (34).

8. The device as claimed in claim 6 or 7, **characterized in that** the annular deflector (104) is split into sectors and made up of several parts assembled end to end via sealing strips.

9. The device as claimed in anyone of claims 1 to 3, **characterized in that** the drillings (90) formed in the external annular rim (42) of the nozzle assembly (18) are more or less perpendicular to this rim and are supplied with cooling air via slots (92) formed in regions where this rim catches on the casing (22) of the turbine

10. A turbine for a turbomachine, such as for a turbomachine, or a turbopropulsor, **characterized in that** it includes a cooling device as claimed in anyone of the preceding claims

11. A turbomachine turbine upstream nozzle assembly, comprising an annular row of vanes which are connected by their radially internal ends to an internal wall of revolution and by their radially external ends to an external wall of revolution, the vanes including internal cavities for the flow of cooling air and the external wall (38) including an external annular rim (42) at its downstream end with mean (44) which engages a casing of the turbomachine, **characterized in that** radially external ends of the internal cavities (46) of the vanes (20) are closed by plates (64) attached to the external wall of the nozzle assembly and the plates and the annular rim (42) of the nozzle assembly include drillings (82, 90, 100) for the passage of cooling air.

12. The nozzle assembly as claimed in claim 11, **characterized in that** the drillings (100) are formed at the internal periphery of the annular rim (42).

13. The nozzle assembly as claimed in claim 11 or 12, **characterized in that** the drillings (82, 90) are formed obliquely or perpendicularly with respect to the annular rim (42).

14. The nozzle assembly as claimed in claim 11 or 12, **characterized in that** an annular deflector (104) is fixed to the external wall of revolution (38) downstream of the annular rim (42).

## Patentansprüche

1. Vorrichtung zum Abkühlen eines Turbinengehäuses in einer Turbomaschine, insbesondere in einem Turbostrahltriebwerk oder Turbopropellertriebwerk für Flugzeuge, wobei diese Turbine (16) mehrere Stufen enthält, die jeweils einen Leitapparat (18) aufweisen, das aus einer ringförmigen Reihe von Leitschaufeln (20) gebildet ist, die von dem Gehäuse (22) der Turbine getragen werden, sowie ein Rad (24), das innerhalb des Gehäuses in einem zylindrischen Mantel drehbar gelagert ist, der aus Ringsektoren (24) gebildet ist, die umfänglich am Gehäuse befestigt sind, und einen Kühlkreis zum Abkühlen der Schaufeln (20) des Leitapparats der stromaufwärtigen Stufe, enthaltend Zuführleitungen zum Zuführen von Kühlluft in Hohlräume (46), die in den Schaufeln (20) des Leitapparats ausgebildet sind, und Luftzuführmittel an stromaufwärtigen Gehäusehaken (72) zur Aufhängung der Ringsektoren (34), die das Rad (24) der stromaufwärtigen Stufe umgeben, wobei diese Luftzuführmittel die inneren Hohlräume (46) der Schaufeln des Leitapparats (18) der stromaufwärtigen Stufe mit dem ringförmigen Raum (76) verbinden, in welchem sich die stromaufwärtigen Haken (72) befinden, **dadurch gekennzeichnet, dass** die inneren Hohlräume (46) der Schaufeln (20) an ihren radial äußeren Enden von Platten (64) verschlossen werden, die an den Leitapparat angesetzt sind, und dass die Luftzuführmittel Bohrungen (80), die in diesen Platten ausgebildet sind, und Bohrungen (82, 90, 100) aufweisen, die in einer äußeren, stromabwärtigen Ringumrandung (42) des Leitapparats ausgebildet sind, die sich radial von der äußeren Umlauf wand des Leitapparats ausgehend stromaufwärts der stromaufwärtigen Haken (72) zur Aufhängung der Ringsektoren (34) erstreckt.

2. Vorrichtung nach Anspruch l, **dadurch gekennzeichnet, dass** die Luftzuführmittel an den stromaufwärtigen Gehäusehaken (72) am Umfang des Leitapparats (18) verteilt und in jeder Leitschaufel (20) ausgebildet sind.

3. Vorrichtung nach Anspruch 1 oder 2, **dadurch gekennzeichnet, dass** die Bohrungen (80, 82, 90, 100) durch Elektroerosion ausgebildet sind.

4. Vorrichtung nach einem der Ansprüche 1 bis 3, **dadurch gekennzeichnet, dass** die in der äußeren Ringumrandung (42) des Leitapparats (18) ausgebildeten Bohrungen (82, 100) sich schräg zu dieser Umrandung und zur Drehachse erstrecken.

5. Vorrichtung nach Anspruch 4, **dadurch gekennzeichnet, dass** die Bohrungen (82) an ihren stromabwärtigen Enden direkt in den ringförmigen Raum (76) münden, in welchem sich die stromaufwärtigen Haken (72) befinden.

6. Vorrichtung nach einem der Ansprüche 1 bis 4, **dadurch gekennzeichnet, dass** die Bohrungen (100) am inneren Umfang der äußeren Ringumrandung (42) ausgebildet sind und an ihren stromabwärtigen Enden in einen ringförmigen Durchgang (102) münden, der zwischen der äußeren Ringumrandung (42) des Leitapparats (18) und einem ringförmigen Abweiser (104) ausgebildet ist, der an ein stromabwärtiges Endteil des Leitapparats angesetzt und befestigt ist.

7. Vorrichtung nach Anspruch 6, **dadurch gekennzeichnet, dass** der ringförmige Abweiser (104) in eine äußere Ringnut des Leitapparats (18) eingreift und darin befestigt ist und axial in Anlage an den stromaufwärtigen Enden der Ringsektoren (34) ist.

8. Vorrichtung nach Anspruch 6 oder 7, **dadurch gekennzeichnet, dass** der ringförmige Abweiser (104) in Segmente unterteilt ist und aus mehreren Teilen (112) gebildet ist, die über Dichtlaschen stumpf aneinandergefügt sind.

9. Vorrichtung nach einem der Ansprüche 1 bis 3, **dadurch gekennzeichnet, dass** die Bohrungen (90), die in der äußeren Ringumrandung (42) des Leitapparats (18) ausgebildet sind, im wesentlichen senkrecht zu dieser Umrandung verlaufen und über Auskehlungen (92) mit Kühlluft versorgt werden, die in den Verhakungsbereichen dieser Umrandung an dem Gehäuse (22) der Turbine ausgebildet sind.

10. Turbine einer Turbomaschine, wie etwa eines Turbostrahltriebwerks oder eines Turbopropellertriebwerk für Flugzeuge, **dadurch gekennzeichnet, dass** sie eine Kühlvorrichtung nach einem der vorangehenden Ansprüche aufweist.

11. Stromaufwärtiger Turbinenleitapparat einer Turbomaschine, enthaltend eine ringförmige Reihe von Leitschaufeln, die an ihren radial inneren Enden mit einer inneren Umlaufwand und an ihren radial äußeren Enden mit einer äußeren Umlaufwand verbunden sind, wobei die Leitschaufeln innere Hohlräume zum Strömen von Kühlluft aufweisen und die äußere Wand (38) eine äußere Ringumrandung (42) an ihrem stromabwärtigen Ende aufweist, die mit Verhakungsmitteln (44) zum Verhaken an einem Gehäuse der Turbomaschine ausgebildet ist, **dadurch gekennzeichnet, dass** die inneren Hohlräume (46) der Leitschaufeln (20) an ihren radial äußeren Enden von Platten (64) verschlossen werden, die an die äußere Wand des Leitapparats angesetzt sind, und dass diese Platten und die Ringumrandung (42) des Leitapparats Bohrungen (82, 90, 100) für den Durchtritt von Kühlluft aufweisen.

12. Leitapparat nach Anspruch 11, **dadurch gekennzeichnet, dass** die Bohrungen (100) am inneren Umfang der Ringumrandung (42) ausgebildet sind.

13. Leitapparat nach Anspruch 11 oder 12, **dadurch gekennzeichnet, dass** die Bohrungen (82, 90) schräg bzw. senkrecht zur Ringumrandung (42) ausgebildet sind.

14. Leitapparat nach Anspruch 11 oder 12, **dadurch gekennzeichnet, dass** ein ringförmiger Abweiser (104) an die äußere Umlaufwand (38) stromabwärts der Ringumrandung (42) befestigt ist.
